Europäisches Patentamt

European Patent Office

Office européen des brevets

(19)

(11) EP 0 530 103 B1

(12) FASCICULE DE BREVET EUROPEEN

(45) Date de publication et mention
de la délivrance du brevet:
20.11.1996 Bulletin 1996/47

(51) Int. Cl.⁶: $C01B\ 39/00$, $B01J\ 29/08$

(21) Numéro de dépôt: 92402347.6

(22) Date de dépôt: 27.08.1992

(54) **Procédé de synthèse de zéolites à charpente aluminosilicique appartenant à la famille structurale de la faujasite, produits obtenus et leur application en adsorption et catalyse**

Verfahren zur Synthese von Zeolithen, die ein zur Faujasit-Strukturgruppe gehörendes aluminosilikatisches Gerüst haben, daraus erhaltene Produkte und deren Verwendung zur Adsorption und Katalyse

Method for synthesis of zeolites having an aluminosilicio framework belonging to the structural group of faujasite, products obtained and their use in adsorption and catalysis

(84) Etats contractants désignés:
CH DE ES GB IT LI NL SE

(30) Priorité: 28.08.1991 FR 9110691

(43) Date de publication de la demande:
03.03.1993 Bulletin 1993/09

(73) Titulaire: ELF AQUITAINE
92400 Courbevoie (FR)

(72) Inventeurs:
• Dougnier, François
F-68110 Illzach (FR)
• Guth, Jean-Louis
F-68200 Brunstatt (FR)
• Patarin, Joel
F-68093 Mulhouse (FR)
• Anglerot, Didier
F-64140 Lons (FR)

(74) Mandataire: Boillot, Marc
Elf Aquitaine Production,
Département Propriété Industrielle,
Tour Elf,
Cédex 45
92078 Paris La Défense (FR)

(56) Documents cités:
FR-A- 2 651 767

• Annexe 1 et 2, recues le 02.01.95 (etraits de la thèse de Mr. Delprato 1989)

**Description**

L'invention a trait à un procédé de synthèse de zéolithes à charpente aluminosilicate appartenant à la famille structurale de la faujasite. Elle concerne encore les produits obtenus et leur application en adsorption et catalyse.

Les zéolithes sont des tectosilicates cristallisés. Les structures sont constituées par des assemblages de tétraèdres $TO_4$ formant une charpente tridimensionnelle par la mise en commun des atomes d'oxygène. Dans les zéolithes du type aluminosilicate qui sont les plus communes, T représente le silicium tétravalent ainsi que l'aluminium trivalent. La charpente tridimensionnelle précitée présente des cavités et canaux qui possèdent des dimensions moléculaires et accueillent les cations compensant le déficit de charge lié à la présence de l'aluminium trivalent dans les tétraèdres $TO_4$, lesdits cations étant généralement échangeables.

D'une manière générale, la composition des zéolithes peut être représentée par la formule brute ($M_{2/n}O$, $Y_2O_3$, x $ZO_2$) à l'état déshydraté et calciné. Dans cette formule Z et Y désignent respectivement les éléments tétravalents et trivalents des tétraèdres $TO_4$, M représente un élément électropositif de valence n tel qu'un métal alcalin ou alcalinoterreux et constitue le cation de compensation et x est un nombre pouvant varier de 2 à théoriquement l'infini auquel cas la zéolithe est une silice.

Chaque type de zéolithe possède une structure microporeuse distincte. La variation des dimensions et formes des micropores d'un type à l'autre, entraîne des changements dans les propriétés adsorbantes. Seules les molécules ayant certaines dimensions et formes sont capables d'entrer dans les pores d'une zéolithe particulière. En raison de ces caractéristiques remarquables les zéolithes conviennent tout particulièrement pour la purification ou la séparation de mélanges gazeux ou liquides comme, par exemple, la séparation d'hydrocarbures par adsorption sélective.

La composition chimique, avec en particulier la nature des éléments présents dans les tétraèdres $TO_4$ et la nature des cations de compensation échangeables, est également un facteur important intervenant dans la sélectivité de l'adsorption et surtout dans les propriétés catalytiques de ces produits. Ils sont utilisés comme catalyseurs ou supports de catalyseurs dans le craquage, le reformage et la modification d'hydrocarbures ainsi que dans l'élaboration de nombreuses molécules.

De nombreuses zéolithes existent dans la nature, ce sont des aluminosilicates dont les disponibilités et les propriétés ne répondent pas toujours aux exigences des applications industrielles. De ce fait, la recherche de produits ayant des propriétés nouvelles a conduit à la synthèse d'une grande variétés de zéolithes parmi lesquelles on peut signaler la zéolithe A (US-A-2882243), la zéolithe X (US-A-2882244), la zéolithe Y (US-A-3130007).

Les zéolithes de la famille structurale de la faujasite sont caractérisées par une structure de charpente tridimensionnelle qui peut être décrite à partir de l'assemblage de modules appelés cube-octaèdres. Chacun de ces modules est constitué de 24 tétraèdres contenant les éléments Si et Al dans notre cas et pontés par l'oxygène selon le principe décrit plus haut. Dans le cube-octaèdre, les tétraèdres sont liés de manière à former huit cycles à six tétraèdres et six cycles à quatre tétraèdres.

Chaque cube-octaèdre est relié en coordinance tétraédrique, à travers quatre cycles à six tétraèdres, à quatre cube-octaèdres voisins.

Il est commode, pour montrer les relations qui unissent les différents membres de la famille structurale, de considérer des plans structuraux dans lesquels les cube-octaèdres sont disposés aux sommets d'un réseau plan d'hexagones. Chaque cube-octaèdre est aussi relié à trois voisins dans le plan structural.

La quatrième direction de liaison est dirigée alternativement de part et d'autre du plan structural et permet de relier les cube-octaèdres entre plans structuraux voisins et parallèles.

Tous les solides appartenant à la famille structurale de la faujasite possèdent des canaux interconnectés d'environ 0,8nm de diamètre. Ainsi la faujasite est une zéolithe à charpente aluminosilicate dont la structure correspond à l'empilement de trois plans structuraux distincts, ABC correspondant à une structure de symétrie cubique.

On peut obtenir, par synthèse à partir d'un gel aluminosilicate des composés de la même structure que la faujasite.

Le procédé général de synthèse des zéolithes à charpente aluminosilicate appartenant à la famille structurale de la faujasite consiste en une cristallisation hydrothermale de gels aluminosilicates sodiques de compositions particulières et renfermant un agent structurant consistant en un cation métallique.

Plus précisément un tel procédé consiste à réaliser tout d'abord un mélange réactionnel ayant un pH supérieur à 10 et renfermant de l'eau, une source de silicium tétravalent, une source d'aluminium trivalent, une source d'ions hydroxydes sous la forme d'une base forte, une source de cations métalliques $M^{n+}$, n étant la valence de M, de manière à obtenir un gel aluminosilicate ayant la composition voulue pour permettre sa cristallisation en un composé de la famille structurale de la faujasite, puis à maintenir le gel obtenu, directement ou après murissement préalable, à une température au plus égale à 150°C et sous une pression au moins égale à la pression autogène du mélange constitué par ledit gel pendant une durée suffisante pour effectuer la cristallisation de ce gel.

Comme indiqué plus haut, un tel procédé ne permet pas de synthétiser des zéolithes à charpente aluminosilicate ayant la structure de symétrie cubique de la faujasite et un rappport Si/Al supérieur à 3.

La demande de brevet français n° 89 11949 décrit la synthèse de la faujasite caractérisée par des rapports Si/Al pouvant être supérieur à 3, en utilisant comme structurant des éthers monométhyliques de polyéthylèneglycol dont la masse moléculaire varie entre 200 et 350 ce qui correspond à 4 et 8 unités d'oxydes d'éthylène.

On a maintenant trouvé que les polyoxydes d'alcoylene de masse moléculaire beaucoup plus élevée ont également la propriété d'orienter la cristallisation de gels aluminosilicates vers des zéolithes de la famille structurale de la faujasite caractérisées par des rapports Si/Al pouvant être supérieur à 3.

L'utilisation de ces polyoxydes d'alcoylène de masse moléculaire élevée améliore la qualité des cristaux obtenus. La qualité des cristaux d'une zéolithe influence aussi bien sa stabilité que son efficacité comme absorbant au catalyseur.

Tous ces polyoxydes d'alcoylène de masse moléculaire élevée sont fabriqués industriellement et sont donc facilement accessibles.

L'invention a donc pour objet un procédé de préparation de zéolithes à charpente aluminosilicate appartenant à la famille structurale de la faujasite et présentant un rapport Si/Al supérieur à 1 et pouvant dépasser 3, ledit procédé étant du type dans lequel on réalise tout d'abord un mélange réactionnel ayant un pH supérieur à 10 et renfermant de l'eau, une source de silicium tétravalent, une source d'aluminium trivalent, une source d'ions hydroxydes sous la forme d'une base forte et un agent structurant ST de manière à obtenir un gel aluminosilicate, ayant la composition voulue pour permettre sa cristallisation en un composé de la famille structurale de la faujasite, puis on maintient le gel obtenu, éventuellement après murissement préalable, à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire l'agent structurant et produire la zéolithe, et il se caractérise en ce que l'agent structurant ST consiste en au moins un composé choisi parmi les polyoxydes d'alcoylène répondant à la formule

$$R - O ( - C_mH_{2m-1}X-O)_n - R' \qquad\qquad (I)$$

dans laquelle R et R', identiques ou différents, représentent chacun un atome d'hydrogène ou un radical alcoyle en $C_1$ à $C_4$, X désigne un atome d'hydrogène ou un radical -OH, m est égal à 2 ou 3 et peut être différent d'un motif à l'autre et n est un nombre compris entre 25 et 800 et de préférence entre 40 et 600.

Avantageusement la quantité d'agent structurant ST présente dans le mélange réactionnel destiné à former le gel est telle que le rapport molaire ST : $Al^{III}$ aille de 0,1 à 4, ledit rapport allant de préférence de 0,1 à 2.

En particulier, les ingrédients constituant le mélange réactionnel donnant naissance au gel aluminosilicate sont utilisés de telle sorte que ledit gel ait, en termes de rapports molaires, la composition suivante :

|  | Intervalles avantageux | Intervalles préférés |
|---|---|---|
| $Si^{IV} : Al^{III}$ | 2 à 20 | 4 à 10 |
| $OH^- : Al^{III}$ | 2 à 12 | 3 à 10 |
| $ST : Al^{III}$ | $1\times10^{-4}$ à 4 | $1\times10^{-3}$ à 2 |
| $H_2O : Al^{III}$ | 40 à 200 | 50 à 150 |

Des exemples d'agents structurants répondant à la formule (I) sont les polyoxydes d'éthylène, les polyoxydes de propylène, les polyoxydes d'éthylène-propylène et leurs monométhyl et diméthyléthers.

L'utilisation d'agents structurants selon l'invention conduit à l'obtention de zéolithes ayant la structure de symétrie cubique de la faujasite.

Parmi les sources de silicium tétravalent $Si^{IV}$ utilisables dans la préparation du mélange réactionnel, destiné à former le gel aluminosilicate, on peut citer les silices solides finement divisées sous forme d'hydrogels, d'aérogels ou de suspensions colloïdales, les silicates hydrosolubles tels que les silicates alcalins comme le silicate de sodium, les esters siliciques hydrolysables tels que les orthosilicates de tétraalcoyles de formule $Si(OR)_4$ dans laquelle R désigne un alcoyle en $C_1$ à $C_4$ tel que méthyle et éthyle.

La source de silicium est mise en oeuvre sous la forme d'une solution aqueuse vraie, cas des silicates hydrosolubles, ou bien d'une suspension aqueuse qui peut être colloïdale, cas des silices finement divisées.

Conviennent comme sources d'aluminium trivalent $Al^{III}$, les sels d'aluminium tels que sulfate, nitrate, chlorure, fluorure, acétate, les oxydes et hydroxyoxydes d'aluminium, les aluminates et notamment les aluminates alcalins tels que l'aluminate, de sodium, les esters d'aluminium tels que les aluminium trialcoxydes de formule Al $(OR)_3$ dans laquelle R désigne un radical alcoyle en $C_1$ à $C_4$ tel que méthyle, éthyle ou propyle.

La source d'ions hydroxydes est choisie parmi les bases fortes minérales, notamment hydroxydes des métaux alcalins du groupe IA de la Classification Périodique des Eléments et hydroxydes des métaux alcalinoterreux Ca, Sr et Ba, et les bases fortes organiques, notamment hydroxydes d'ammoniums quaternaires la préférence allant aux bases minérales notamment à la soude NaOH.

Le mélange réactionnel destiné à former le gel d'aluminosilicate peut encore renfermer des cations $M^{n+}$ d'au moins un métal M, de valence n, autre que les métaux dont les hydroxydes sont des bases fortes en quantité globale telle que le rapport molaire $M^{n+}:Al^{III}$ soit au plus égal à 0,4 et de préférence au plus égal à 0,3. Lesdits cations $M^{n+}$ sont introduits dans ledit mélange réactionnel sous la forme de sels tels que sulfates, nitrates, chlorures ou acétates ou bien encore sous la forme d'oxydes.

Le mélange des ingrédients constituant le mélange réactionnel destiné à former le gel d'aluminosilicate peut être réalisé dans un ordre quelconque.

Avantageusement on effectue ledit mélange en préparant tout d'abord, à température ambiante, une solution aqueuse basique renfermant une base forte, l'agent structurant ST et les cations $M^{n+}$ s'ils sont utilisés, puis en incorporant à cette solution une solution aqueuse de la source de d'aluminium trivalent et une solution aqueuse ou une suspension, colloïdale ou non, de la source de silicium tétravalent. Le pH du mélange réactionnel, dont la valeur est supérieure à 10, est de préférence proche de 13,5. Avant de procéder à la cristallisation du gel, on peut ajouter au milieu réactionnel destiné à former ledit gel, des germes de cristallisation en quantité allant avantageusement de 0,1% à 10% en poids du milieu réactionnel.

Les germes peuvent être produits par broyage d'une zéolithe de type faujasite, c'est-à-dire de même nature que la phase cristalline à produire. En l'absence d'ajout de germes, il est avantageux de soumettre le gel d'aluminosilicate, formé à partir du mélange réactionnel, à un mûrissement, dans une enceinte fermée, à une température inférieure à la température de cristallisation pendant une durée pouvant aller d'environ 6 heures à environ 6 jours. Ledit mûrissement peut être réalisé en statique ou sous agitation. La cristallisation du gel d'aluminosilicate, avec ou sans germe, s'effectue en chauffant le mélange réactionnel à une température au plus égale à 150°C et de préférence allant de 90°C à 120°C et sous une pression correspondant au moins à la pression autogène du mélange réactionnel formant le gel. La durée du chauffage nécessaire à la cristallisation dépend de la composition du gel et de la température de cristallisation. Elle se situe généralement entre 2 heures et 12 jours.

Les cristaux obtenus, désignés par précurseurs de la zéolithe et consistant en la zéolithe emprisonnant l'agent structurant et l'eau d'hydratation des cations dans ses pores et cavités, sont séparés du milieu de cristallisation par filtration, puis lavés à l'eau distillée ou désionisée jusqu'à obtenir des eaux de lavage peu basiques, c'est-à-dire dont le pH est inférieur à 9. Les cristaux lavés sont ensuite séchés en étuve à une température comprise entre 50°C et 100°C et de préférence vers 70°C.

La zéolithe est obtenue à partir des cristaux du précurseur en soumettant lesdits cristaux à une calcination, à une température supérieure à 300°C et de préférence comprise entre 400°C et 700°C pendant une durée suffisante pour éliminer l'agent structurant et l'eau d'hydratation des cations contenus dans le précurseur.

Comme indiqué précédemment, les zéolithes préparées par le procédé selon l'invention possèdent des rapports Si/Al supérieurs à 1 et pouvant dépasser 3 et présentent une structure de symétrie cubique du type de celle de la faujasite.

La caractérisation des produits selon l'invention, a savoir les précurseurs issus de la cristallisation et les zéolithes proprement dites résultant de la calcination des précurseurs, peut se faire en utilisant les techniques suivantes :

Microscopie électronique :

Au microscope électronique, les produits de structure cubique se présentent sous des formes compatibles avec la symétrie cubique (par exemple octaèdres réguliers).

Diagramme de diffraction des rayons X :

Ce diagramme de diffraction est obtenu au moyen d'un diffractomètre en utilisant la méthode classique des poudres avec le rayonnement K du cuivre.

Un étalon interne permet de déterminer précisément les valeurs des angles $2\theta$ associés aux pics de diffraction. Les différentes distances interréticulaires $\Delta(d_{hkl})$ caractéristiques de l'échantillon, sont calculées à partir de la relation de BRAGG.

L'estimation de l'erreur de mesure $\Delta(d_{hkl})$ sur $d_{hkl}$ se calcule, en fonction de l'erreur absolue $(2\theta)$ affectée à la mesure de $2\theta$, par la relation de BRAGG.

En présence d'un étalon interne, cette erreur est minimisée et prise couramment égale à ± 0,05°. L'intensité relative I/Io affectée à chaque $d_{hkl}$ est estimée à partir de la hauteur du pic de diffraction correspondant. On utilise une échelle de symboles pour caractériser cette intensité relative comme suit :

FF=très forte, F=forte, mF=moyennement forte, m=moyenne mf=moyennement faible, f=faible, ff=très faible.

Thermogramme :

Les thermogrammes réalisés sur les échantillons de produits permettent de quantifier le nombre de molécules d'agent structurant et le nombre de molécules d'eau qui sont contenues dans une maille de la structure.

RMN du carbone 13 :

La RMN du carbone 13 en polarisation croisée avec rotation à l'angle magique réalisée sur des échantillons du précurseur permet de confirmer la présence de l'agent structurant dans les cavités du produit.

Détermination du rapport Si:Al

Elle peut être réalisée en faisant appel à l'une des techniques suivantes :

- analyse chimique
- RMN du Silicium 29

Les zéolithes selon l'invention de type faujasite ont une structure cubique présentant une valeur du paramètre a de la maille cubique comprise entre 2,4 et 2,5 nm, on peut donner à ces zéolithes cubiques la formule suivante ramenée à une maille (assemblage de 192 tétraèdres) $(v\ M_1^{q+})\ (w\ M^{n+})\ ((SiO_2)_{192-x}\ (AlO_2)_x)^{x-}\ , (zH_2O)$ avec dans cette formule $M_1^{q+}$ désignant un cation q-valent d'un métal du groupe I A de la Classification Périodique des Eléments (q=1) ou d'un métal alcalino-terreux choisi parmi Ca, Sr et Ba (q=2) ou un cation monovalent renfermant de l'azote (q=1), notamment ammonium ou ammonium quaternaire, $M^{n+}$ représentant un cation métallique de valence n autre qu'un cation $M_1^{q+}$ , x z, w et v étant des nombres tels que $38 < x \leq 96$ , $z \geq 0$ selon l'état d'hydratation de la zéolithe (z=O pour une zéolithe complètement anhydre),

$$O < v \leq \frac{x}{q} \text{ et } O < w \leq \frac{x}{n} \text{ avec } qv + wn \geq x$$

Le tableau I ci-après représente le diagramme de diffraction des rayons X caractéristique des zéolithes cubiques du type faujasite après calcination des produits à 500°C pendant 4 heures.

Dans la colonne des $d_{hkl}$ on a donné les valeurs moyennes des distances interréticulaires. Chacune de ces valeurs doit être affectée de l'erreur de mesure $\Delta\ (d_{hkl})$ comprise entre ± 0,1 et ± 0,004.

Les variations qui peuvent être observées par rapport à ces valeurs moyennes sont essentiellement liées à la nature des cations de compensation et au rapport Si/Al de la zéolithe. Les mêmes remarques s'appliquent aux intensités relatives I/Io.

TABLEAU I

| Diagramme de diffraction des rayons X des zéolithes après calcination | | | |
|---|---|---|---|
| $2\theta$ (degrés) | $d_{hkl}$ ($10^{-1}$ nm) | (hkl) | I/Io |
| 6,24 | 14,14 ± 0,2 | 111 | FF |
| 10,18 | 8,68 | 220 | Mf |
| 11,93 | 7,41 | 311 | mF |
| 15,70 | 5,63 ± 0,1 | 331 | F |
| 18,74 | 4,73 | 511 | mF |
| 20,41 | 4,34 | 440 | mF |
| 21,35 | 4,15 | 531 | f |
| 22,84 | 3,88 | 620 | m |
| 23,70 | 3,75 | 533 | F |
| 23,98 | 3,70 | 622 | mf |
| 25,07 | 3,54 | 444 | f |
| 25,84 | 3,44 | 551 | mf |
| 27,10 | 3,287 ± 0,02 | 642 | mF |
| 27,82 | 3,204 | 731 | m |
| 29,68 | 3,006 | 733 | m |

Les précurseurs de zéolithes qui sont produits lors de l'étape de cristallisation du procédé selon l'invention et dont la calcination conduit aux zéolithes dont les formules ont été définies plus haut, sont des aluminosilicates cristallins présentant un rapport Si:Al supérieur à 1 et pouvant dépasser 3, qui ont la structure cubique de la faujasite correspondant à un diagramme de diffraction des rayons X comparable à celui donné dans le tableau II et qui possèdent des cavités emprisonnant des molécules de structurant ST, qui sont choisies parmi les polyoxydes d'alcoylène dont la formule a été définie précédemment.

TABLEAU II

| Diagramme de diffraction des rayons X du précusseur Zéolithique | | | |
|---|---|---|---|
| $2\theta$ (degrés) | $d_{hkl}$ ($10^{-1}$ nm) | (hKl) | I/Io |
| 6,27 | 14,08 + 0,2 | 111 | FF |
| 10,19 | 8,66 | 220 | mF |
| 11,95 | 7,39 | 311 | mF |
| 15,70 | 5,63 + 0,1 | 331 | F |
| 17,73 | 4,99 | 422 | f |
| 18,72 | 4,73 | 511 | mF |
| 20,41 | 4,34 | 440 | mF |
| 21,16 | 4,15 | 531 | f |
| 22,84 | 3,89 | 620 | m |
| 23,71 | 3,74 | 533 | F |
| 23,97 | 3,70 | 622 | mf |
| 25,02 | 3,55 | 444 | ff |
| 25,83 | 3,44 | 551 | mf |
| 27,10 | 3,287 + 0,02 | 642 | mF |
| 27,81 | 3,205 | 731 | mf |
| 29,70 | 3,005 | 733 | m |

Les zéolithes obtenues par le procédé selon l'invention sont utilisables dans les mêmes types d'application que les zéolithes de structure similaire et de rapport Si : Al comparable ou inférieur préparées par des méthodes voisines ou différentes.

Ainsi les zéolithes obtenues selon l'invention conviennent comme adsorbant pour effectuer l'adsorption sélective de molécules dont les dimensions sont inférieures à 0,8 nm ou encore, après avoir été soumises à des réactions d'échange avec des cations divers, comme catalyseurs ou composantes de catalyseurs utilisables dans les réactions de conversion catalytique de composés organiques et notamment de composés hydrocarbonés. Par exemple, par traitement d'échange avec des cations ammonium suivi d'une calcination on obtient la forme protonée de la zéolithe. Cette forme ainsi que celles résultant d'un traitement d'échange avec des cations des terres rares comme le lanthane sont appropriées comme catalyseurs acides pour l'hydrocraquage des charges pétrolières. Les zéolithes peuvent être également soumises à des traitements d'échange avec des cations de métaux des groupes II à VIII de la Classification Périodique pour former des produits appropriés comme catalyseurs de conversion des hydrocarbures. Pour leurs applications en tant que catalyseurs, les zéolithes modifiées par échange avec des cations leur conférant des propriétés catalytiques peuvent être utilisées seules ou sous la forme de produits composites résultant du mélange de ces zéolithes modifiées avec d'autres produits catalytiquement actifs et/ou avec une matrice amorphe telle qu'un gel de silice ou encore un gel mixte de silice et d'un autre oxyde tel que magnésie, alumine, oxyde de titane, oxyde de zirconium, ladite matrice servant à conférer, entre autres, une meilleure stabilité thermique au catalyseur.

Les catalyseurs composites associant une ou plusieurs zéolithes catalytiquement actives à une matrice à base de gel de silice ou de gel mixte de silice et d'un autre oxyde sont particulièrement appropriés pour les opérations en lit mobile ou en lit fluidisé car ils peuvent être façonnés aisément, par exemple par séchage par pulvérisation d'une suspension aqueuse des ingrédients les composant, en grains ayant les dimensions requises pour ces opérations.

Les exemples suivants sont donnés à titre non limitatif pour illustrer l'invention.

Dans ces exemples, les quantités et pourcentages sont donnés en poids sauf indication contraire.

EXEMPLE 1 :

On préparait tout d'abord un gel aluminosilicate en opérant comme suit dans un récipient de capacité appropriée, le contenu dudit récipient étant maintenu sous agitation pendant toute la durée de l'opération.

Dans le récipient on introduisait 8,1 parties d'eau, 0,53 partie de soude NaOH et, après dissolution de la soude, 1 partie d'agent structurant consistant polyoxyde d'éthylène de masse moléculaire moyenne en nombre Mn égale à 3400. (POE 3400) Après dissolution totale, on ajoutait au contenu du récipient 0,91 partie d'aluminate de sodium renfermant 56 % d'$Al_2O_3$ et 37 % de $Na_2O$.

Après obtention d'une solution limpide, on introduisait dans le récipient 7,5 parties d'une suspension colloïdale de silice renfermant 40% de $SiO_2$ et 60% d'eau.

On obtenait ainsi un gel d'aluminosilicate dont la composition molaire, rapportée à une mole d'$Al_2O_3$ était la suivante :

10 $SiO_2$; 1 $Al_2O_3$; 2,4 $Na_2O$; 0,0588 "$POE_{3400}$"; 140 $H_2O$

Le gel obtenu était soumis à un mûrissement à température ambiante pendant 24 heures dans un récipient fermé. Le gel mûri était ensuite placé dans un autoclave et maintenu à 100°C dans ce dernier pendant 7 jours pour former un produit cristallisé. Les cristaux obtenus étaient séparés du milieu réactionnel par filtration, puis lavés à l'eau distillée jusqu'à faible basicité (pH inférieur à 9) des eaux de lavage et enfin séchés à environ 80°C dans une étuve.

Les cristaux séchés étaient ensuite calcinés à 500°C pendant 4 heures afin d'éliminer les molécules de l'agent structurant utilisé et d'obtenir la zéolithe.

Avant calcination, le produit cristallisé présente un diagramme de diffraction des rayons X comparable à celui donné dans le tableau II, ledit produit présentant en outre un rapport Si : Al égal à 3,5 et renfermant dans ses micropores de molécules d'eau et des molécules d'agent structurant. Les espèces occluses dans les micropores de la zéolithe (eau et agent structurant) représentent 25,5 % du précurseur zéolithique.

La zéolithe formée par calcination du produit cristallisé ci-dessus présente un diagramme de diffraction des rayons X comparable à celui donné dans le tableau I.

La formule trouvée pour cette zéolithe, ramenée à une maille cubique de 192 tétraèdres, s'écrit à l'état anhydre

$$42,6\ N_a^+\ [(SiO_2)_{149,3}\ (AlO_2)_{42,6}]^{42,6-}$$

EXEMPLE 2 :

On opérait comme indiqué dans l'exemple 1 en remplaçant toutefois l'agent structurant par le polyoxyde d'éthylène de masse moléculaire moyenne en nombre Mn égale à 2000 (POE 2000)

Le gel aluminosilicate, avant mûrissement, avait la composition molaire suivante :

10 $SiO_2$; 1 $Al_2O_3$; 2,4 $Na_2O$; 0,1 "POE 2000" ; 140 $H_2O$. Avant calcination, le produit cristallisé présente un diagramme de diffraction des rayons X comparable à celui donné dans le tableau II. Toutefois on peut noter la présence d'une faible quantité d'impureté du type gmelinite (5 %).

Ledit produit présente un rapport Si : Al égal à 3,4 et renferme dans ses micropores des molécules d'eau et des molécules de l'agent structurant utilisé. Les espèces occluses dans les micropores de la zéolithe avant calcination (eau et agent structurant) représentent 25,7 % du précurseur zéolithique.

La zéolithe formée par calcination du produit précurseur cristallisé présente un diagramme de diffraction des rayons X comparable à celui donné dans le tableau I.

La formule trouvée pour cette zéolithe, ramenée à une maille cubique de 192 tétraèdres, s'écrit à l'état anhydre

$$43,6\ Na^+\ [(SiO_2)_{148,4}\ (AlO_2)_{43,6}]^{43,6-}$$

EXEMPLE 3 :

On préparait tout d'abord un gel aluminosilicate en opérant comme suit dans un récipient de capacité appropriée, le contenu dudit récipient étant maintenu sous agitation pendant toute la durée de l'opération.

Dans le récipient, on introduisait 32,4 parties d'eau, 2,10 parties de soude NaOH et, après dissolution de la soude, 4 parties d'agent structurant constitué par le polyoxyde d'éthylène de masse moléculaire moyenne en nombre Mn égale à 8000 (POE 8000). Après dissolution, on ajoutait alors au contenu du récipient 3,64 parties d'aluminate de sodium renfermant 56 % d'Al2O3 et 37 % de Na2O. Après homogénéisation, on introduisait alors dans le récipient 30 parties d'une suspension colloïdale de silice renfermant 40 % de SiO2 et 60 % d'eau.

On obtenait ainsi un gel d'aluminosilicate dont la composition molaire, rapportée à une mole d'Al2O3, était la suivante :

10$SiO_2$ ; 1$Al_2O_3$ ; 2,4 $Na_2O$ ; 0,025 "POE 8000" ; 140 $H_2O$. Le gel obtenu était soumis à un mûrissement à température ambiante pendant 24 heures dans un récipient fermé. Le gel mûri était ensuite placé dans un autoclave et maintenu à 100° C dans ce dernier pendant 7 jours pour former un produit cristallisé.

Les cristaux formés étaient séparés du milieu réactionnel par filtration, puis lavés à l'eau distillée jusqu'à faible basicité (pH inférieur à 9) des eaux de lavage, et enfin séchés à environ 80° C dans une étuve.

Les cristaux séchés étaient ensuite calcinés à 500° C pendant 4 heures afin d'éliminer les molécules de l'agent structurant utilisé et d'obtenir la zéolithe.

Avant calcination, le produit cristallisé présente un diagramme de diffraction des rayons X comparable à celui donné dans le tableau II. Toutefois on peut constater la présence de gmélinite (<5 %).

Ce produit présente en outre un rapport Si : Al de 3,5 et renferme dans ses micropores des molécules d'eau et des molécules de l'agent structurant utilisé. Les espèces occluses dans les micropores de la zéolithe ($H_2O$ et agent structurant) représentent 24,9 % du précurseur zéolithique.

La zéolithe formée par calcination du produit précurseur ci-dessus présente un diagramme de diffraction des rayons X comparable à celui du tableau I.

La formule trouvée pour cette zéolithe, ramenée à une maille cubique de 192 tétraèdres, s'écrit à l'état anhydre :

$$42,3 \, Na^+ \, [(SiO_2)_{149,7} \, (AlO_2)_{42,3}]^{42,3-}$$

EXEMPLE 4 :

On opérait comme indiqué dans l'exemple 1 avec toutefois les variations suivantes des conditions opératoires

. préparation du gel : 1 partie d'agent structurant constitué par le polyoxyde d'éthylène de masse moléculaire moyenne en nombre Mn égale à 10000 (POE 10000).
. cristallisation : 10 jours à 100°C

Avant mûrissement, le gel d'aluminosilicate avait la composition molaire suivante rapportée à 1 mole d'$Al_2O_3$ :
10 $SiO_2$; 2,4 $Na_2O$ ; 1 $Al_2O_3$ ; 0,02 "$POE_{1000}$" ; 140 $H_2O$

Avant calcination, le produit cristallisé présente un diagramme de diffraction des rayons X comparable à celui tableau II. On peut toutefois noter la présence de gmélinite (environ 5 %). Ledit produit présente en outre un rapport Si:Al égal à 3,4 et contient dans ses micropores des molécules d'eau et des molécules de l'agent structurant utilisé. Les espèces occluses dans les micropores de la zéolithe ($H_2O$ et agent structurant) représentent 25,8 % du précurseur zéolithique.

La zéolithe formée par calcination du produit précurseur ci-dessus présente un diagramme de diffraction des rayons X comparable à celui du tableau I.

La formule trouvée pour cette zéolithe, ramenée à une maille cubique de 192 tétraèdres, s'écrit à l'état anhydre :

$$43,1 \, Na^+ \, [(SiO_2)_{148,9} \, (AlO_2)_{43,1}]^{43,1-}$$

EXEMPLE 5

On préparait tout d'abord un gel aluminosilicate en introduisant dans un récipient agité 32,4 parties d'eau et 4 parties d'agent structurant constitué du polyoxyde d'éthylène de masse moléculaire moyenne en nombre Mn égale à 20000 (POE 20000). Après obtention d'une solution limpide, on ajoutait 2,1 parties de soude NaOH, puis, après dissolution, on additionnait 3,64 parties d'aluminate de sodium renfermant 56 % d'$Al_2O_3$ et 37 % de $Na_2O$. Après homogénéisation du mélange, on introduisait dans le récipient 30 parties d'une suspension colloïdale de silice renfermant 40 % de $SiO_2$ et 60 % d'eau.

On obtenait ainsi un gel d'aluminosilicate dont la composition molaire, rapportée à une mole d'$Al_2O_3$, était la suivante :
10$SiO_2$ ; 1$Al_2O_3$ ; 2,4 $Na_2O$ ; 0,01 "POE 20000" ; 140 $H_2O$.

Le gel obtenu était maintenu à température ambiante pendant 24 heures dans un récipient fermé.

Le gel mûri était ensuite placé dans un autoclave et maintenu à 100° C pendant 12 jours pour former un produit cristallisé.

Le produit résultant était séparé du milieu réactionnel par filtration, puis lavé à l'eau distillée jusqu'à ce que les eaux de lavage aient un pH inférieur à 9 et enfin séché à environ 80° C dans une étuve.

Le produit obtenu présente un diagramme de diffraction des rayons X correspondant à celui d'une zéolithe du type faujasite, avec toutefois la présence d'impureté du type gmélinite (environ 10 %).

EXEMPLE 6

Cet exemple illustre la possibilité d'utiliser des germes d'une préparation précédente dans le milieu réactionnel, de façon à diminuer sensiblement la durée de synthèse.

On préparait un gel d'aluminosilicate en opérant comme indiqué dans l'exemple 1. On rappelle la composition molaire du gel, rapporté à une mole d'$Al_2O_3$.

10 $SiO_2$ ; 1 $Al_2O_3$ ; 2,4 $Na_2O$ ; 1 "POE 3400" ; 140 $H_2O$

Le gel obtenu était soumis à un mûrissement à température ambiante pendant 24 heures dans un récipient fermé.

Par ailleurs, on préparait des germes en soumettant à un traitement de sonication des cristaux de faujasite obtenus dans l'exemple 1.

On ajoutait ensuite au gel mûri 0,15 partie des germes ainsi préparés. Le mélange ainsi réalisé était alors maintenu dans un autoclave porté à 100° C pendant une période de 108 heures.

Les cristaux obtenus étaient séparés du milieu réactionnel puis lavés, séchés et calcinés comme indiqué dans l'exemple 1.

Avant calcination, le produit cristallisé présente un diagramme de diffraction des rayons X comparable à celui donné dans le tableau II, ledit produit présentant en outre un rapport Si : Al égal à 3,5 et renfermant dans ses micropores des molécules d'eau et des molécules d'agent structurant. Les espèces occluses dans les micropores de la zéolithe (eau et agent structurant) représente 25,2 % du précusseur zéolithique. La zéolithe formée par calcination du produit cristallisé ci-dessus présente un diagramme de diffraction des rayons X comparable à celui donné dans le tableau I.

La formule trouvée pour cette zéolithe, ramenée à une maille cubique de 192 tétraèdres, s'écrit à l'état anhydre :

$$42,1 \, Na^+ \, [(SiO_2)_{149,9} \, (AlO_2)_{42,1}]^{42,1-}$$

## Revendications

1. Procédé de préparation de zéolithes à charpente alumino-silicate appartenant à la famille structurale de la faujasite et présentant un rapport Si:Al supérieur à 1 et pouvant dépasser 3, ledit procédé étant du type dans lequel on réalise tout d'abord un mélange réactionnel ayant un pH supérieur à 10 et renfermant de l'eau, une source de silicium tétravalent, une source d'aluminium trivalent, une source d'ions hydroxydes sous la forme d'une base forte et un agent structurant ST de manière à produire un gel aluminosilicate ayant la composition voulue pour permettre sa cristallisation en un composé de la famille structurale de la faujasite, puis on maintient le gel obtenu à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire ledit agent structurant et produire la zéolithe, et se caractérisant en ce que l'agent structurant ST consiste en au moins un composé choisi parmi les polyoxydes d'alcoylène répondant à la formule

$$R - O \, (- C_m H_{2m-1} \, X - O)_n - R'$$

dans laquelle R et R', identiques ou différents, représentent chacun un atome d'hydrogène ou un radical alcoyle en $C_1$ à $C_4$, X désigne un atome d'hydrogène ou un radical -OH, m est égal à 2 ou 3 et peut être différent d'un motif à l'autre et n est un nombre allant de 25 à 800 et de préférence de 40 à 600.

2. Procédé selon la revendication 1, caractérisé en ce que la quantité d'agent structurant ST dans le mélange réactionnel destiné à former le gel est telle que le rapport molaire ST:$Al^{III}$ aille de $1 \times 10^{-4}$ à 4 et de préférence de $1 \times 10^{-3}$ à 2.

3. Procédé selon l'une des revendications 1 à 2, caractérisé en ce que les ingrédients constituant le mélange réactionnel donnant naissance au gel aluminosilicate sont utilisés en quantités telles que ledit gel ait, en termes de rapports molaires, une composition telle que $Si^{IV} : Al^{III}$ = 2 à 20, $OH^- : Al^{III}$ = 2 à 12, ST : $Al^{III}$ = $1 \times 10^{-4}$ à 2 et $H_2O : Al^{III}$ = 40 à 200.

4. Procédé selon la revendication 3, caractérisé en ce que ladite composition est telle que $Si^{IV} : Al^{III}$ = 4 à 10, $OH^- : Al^{III}$ = 3 à 10, ST:$Al^{III}$ = $1 \times 10^{-3}$ à 2 et $H_2O: Al^{III}$ = 50 et 150.

5. Procédé selon l'une des revendications 1 à 4, caractérisé en ce que l'agent structurant ST consiste en au moins un composé choisi dans le groupe formé par les polyoxydes d'éthylène, les polyoxydes de propylène, les polyoxydes d'éthylène-propylène et leurs monométhyl et diméthyléthers.

6.  Procédé selon l'une des revendications 1 à 5, caractérisé en ce que la source de silicium tétravalent est choisie dans le groupe constitué par les silices finement divisées sous la forme d'hydrogels, d'aérogels ou de suspensions colloïdales, les silicates hydrosolubles tels que les silicates alcalins comme le silicate de sodium, et les esters siliciques hydrolysables tels que les orthosilicates de tétraalcoyles de formule $Si(OR)_4$ dans laquelle R désigne un radical alcoyle en $C_1$ à $C_4$.

7.  Procédé selon l'une des revendications 1 à 6, caractérisé en ce que la source d'aluminium trivalent est choisie dans le groupe constitué par les sels d'aluminium, les oxydes et hydroxyoxydes d'aluminium, les aluminates et notamment les aluminates alcalins tels que l'aluminate de sodium, et les esters d'aluminium tels que les aluminium trialcoxydes de formule $Al(OR)_3$ dans laquelle R est un radical alcoyle en $C_1$ à $C_4$.

8.  Procédé selon l'une des revendications 1 à 7, caractérisé en ce que la source d'ions hydroxydes est choisie dans le groupe formé par les hydroxydes des métaux alcalins du groupe IA de la Classification Périodique des Eléments, les hydroxydes des métaux alcalinoterreux Ca, Sr et Ba et les bases fortes organiques.

9.  Procédé selon l'une des revendications 1 à 8, caractérisé en ce que le mélange réactionnel renferme des cations $M^{n+}$ d'au moins un métal M, de valence n, autre que les métaux dont les hydroxydes sont des bases fortes, en quantité globale telle que le rapport molaire $M^{n+} : Al^{III}$ dans ledit mélange soit au plus égal à 0,4 et de préférence au plus égal à 0,3.

10. Procédé selon l'une des revendications 1 à 9, caractérisé en ce qu'avant de procéder à la cristallisation du gel, on ajoute au milieu réactionnel destiné à former ledit gel des germes de cristallisation en quantité allant de 0,1% à 10% en poids dudit milieu réactionnel, lesdits germes de cristallisation étant notamment produits par broyage d'une zéolithe de même nature que la phase cristalline à produire.

11. Procédé selon l'une des revendications 1 à 10, caractérisé en ce qu'avant de procéder à la cristallisation du gel, on soumet ledit gel à un murissement, dans une enceinte fermée, à une température inférieure à la température de cristallisation pendant une durée allant d'environ 6 heures à environ 6 jours.

12. Procédé selon l'une des revendications 1 à 11, caractérisé en ce que la cristallisation du gel aluminosilicate, avec ou sans germe, est réalisée en maintenant ledit gel à une température allant de 90°C à 120°C pendant une durée comprise entre 2 heures et 12 jours.

13. Procédé selon l'une des revendications 1 à 12, caractérisé en ce que la calcination du précurseur de la zéolithe est réalisée à une température supérieure à 300°C et de préférence comprise entre 400°C et 700°C.

14. Précurseurs de zéolithes à charpente aluminosilicate appartenant à la famille structurale de la faujasite consistant en aluminosilicates ayant un rapport Si:Al supérieur à 1 et pouvant dépasser 3 et qui, d'une part, présentent une structure de symétrie cubique comparable à celle de la faujasite et d'autre part, possèdent des cavités ou des canaux emprisonnant des molécules d'au moins un agent structurant ST, caractérisés en ce que l'agent structurant appartient au groupe formé par les polyoxydes d'alcoylène répondant à la formule

$$R - O \, [ \, C_mH_{2m-1}X - O \, ]_n \, R'$$

dans laquelle R et R', identiques ou différents, représentent chacun un atome d'hydrogène ou un radical alcoyle en $C_1$ à $C_4$, X désigne un atome d'hydrogène ou un radical hydroxyle, m est égal à 2 ou 3 et peut être différent d'un motif à l'autre et n est un nombre allant de 25 à 800 et de préférence de 40 à 600.

15. Précurseurs selon la revendication 14, caractérisés en ce que l'agent structurant ST consiste en au moins un composé choisi dans le groupe formé par les polyoxydes d'éthylène, les polyoxydes de propylène, les polyoxydes d'éthylène-propylène et leur monométhyl et diethylesters.

16. Précurseurs selon l'une des revendications 14 ou 15, caractérisés en ce qu'ils présentent un diagramme de diffraction des rayons X comparable à celui qui est défini dans le tableau II de la description.

17. Application des précurseurs selon l'une des revendications 14 à 16 à la production, par calcination desdits précurseurs, de zéolithes à charpente aluminosilicate appartenant à famille structurale de la faujasite et présentant un rapport Si:Al supérieur à 1 et pouvant dépasser 3, et, d'autre part, une structure de symétrie cubique comparable à celle de la faujasite, lesdites zéolithes étant notamment utilisables, directement ou après échange de cations, comme adsorbants ou comme composants de catalyseurs.

18. Application selon la revendication 17, caractérisée en ce que les zéolithes obtenues par calcination des précurseurs présentent une valeur du paramètre a de la maille cubique comprise entre 2,4 et 2,5 nm, ont un diagramme de diffraction des rayons X comparable à celui donné dans le tableau I de la description et répondent à une formule qui, ramenée à une maille de la structure cubique, s'écrit

$$(v\ M^{q+}_1)\ (w\ M^{n+})\ (SiO_2)_{192-x}\ (AlO_2)^{x-}\ (z\ H_2O)$$

et dans laquelle $M^{q+}_1$ désigne un cation q-valent d'un métal du groupe IA de la Classification Périodique des Eléments (q=1) ou d'un métal alcalinoterreux choisi parmi Ca, Sr et Ba (q=2) ou un cations monovalent azoté (q=1), $M^{n+}$ représente un cation d'au moins un métal M de valence n autre qu'un cation $M^{q+}$ et $x_1$,
z, v et w sont des nombres tels que $38 < x < 96$, $z > 0$ et dépendant de l'état d'hydratation du précurseur,

$$0 < v \leq \frac{x}{q} \text{ et } 0 < w \leq \frac{x}{n} \text{ avec } qv+wn \geq x.$$

## Claims

1. Process for the preparation of zeolites of aluminosilicate structure belonging to the structural family of faujasite and having an Si:Al ratio which is higher than 1 and which may exceed 3, the process being of the type in which first a reaction mixture having a pH greater than 10 and containing water, a source of tetravalent silicon, a source of trivalent aluminium, a source of hydroxide ions in the form of a strong base and a structuring agent ST is formed in such a manner as to produce an aluminosilicate gel having the composition desired for permitting its crystallisation to form a compound of the structural family of faujasite, then the gel obtained is maintained at a temperature of no more than 150°C under a pressure at least equal to the autogenous pressure of the mixture constituted by the gel for a period sufficient to effect the crystallisation of this gel to form a zeolite precursor comprising the zeolite trapping the structuring agent ST in its cavities, and the precursor is subjected to calcination in order to destroy the structuring agent and to produce the zeolite, and being characterised in that the structuring agent ST comprises at least one compound selected from the alkylene polyoxides corresponding to the formula

$$R - O\ (-C_mH_{2m-1}\ X - O)_n - R'$$

wherein each of R and R', which may be identical or different, represents a hydrogen atom or a $C_1$-$C_4$ alkyl radical, X represents a hydrogen atom or an -OH radical, m is 2 or 3 and may differ from one unit to another and n is a number from 25 to 800 and preferably from 40 to 600.

2. Process according to Claim 1, characterised in that the amount of structuring agent ST in the reaction mixture that is to form the gel is such that the molar ratio ST:$Al^{III}$ is from $1 \times 10^{-4}$ to 4 and preferably from $1 \times 10^{-3}$ to 2.

3. Process according to either Claim 1 or Claim 2, characterised in that the ingredients constituting the reaction mixture giving rise to the aluminosilicate gel are used in amounts such that the gel has, in terms of molar ratios, a composition such that $Si^{IV} : Al^{III} = 2$ to 20, $OH^- : Al^{III} = 2$ to 12, ST : $Al^{III} = 1 \times 10^{-4}$ to 2 and $H_2O : Al^{III} = 40$ to 200.

4. Process according to Claim 3, characterised in that the composition is such that $Si^{IV} : Al^{III} = 4$ to 10, $OH^- : Al^{III} = 3$ to 10, ST : $Al^{III} = 1 \times 10^{-3}$ to 2 and $H_2O : Al^{III} = 50$ and 150.

5. Process according to any one of Claims 1 to 4, characterised in that the structuring agent ST comprises at least one compound selected from the group consisting of the ethylene polyoxides, the propylene polyoxides, the ethylene-propylene polyoxides and their monomethyl and dimethyl ethers.

6. Process according to any one of Claims 1 to 5, characterised in that the source of tetravalent silicon is selected from the group consisting of finely divided silicas in the form of hydrogels, aerogels or colloidal suspensions, water-soluble silicates, such as alkali silicates, such as sodium silicate, and hydrolysable silicic acid esters, such as tetraalkyl orthosilicates of the formula $Si(OR)_4$ wherein R is a $C_1$-$C_4$ alkyl radical.

7. Process according to any one of Claims 1 to 6, characterised in that the source of trivalent aluminium is selected from the group consisting of aluminium salts, aluminium oxides and hydroxides, aluminates and especially alkali aluminates, such as sodium aluminate, and aluminium esters, such as aluminium trialkoxides of formula Al $(OR)_3$ wherein R is a $C_1$-$C_4$ alkyl radical.

8. Process according to any one of Claims 1 to 7, characterised in that the source of hydroxide ions is selected from the group consisting of the hydroxides of the alkali metals of group IA of the Periodic Table of Elements, the hydroxides of the alkaline earth metals Ca, Sr and Ba and strong organic bases.

9. Process according to any one of Claims 1 to 8, characterised in that the reaction mixture contains $M^{n+}$ cations of at least one metal M, of valency n, other than the metals of which the hydroxides are strong bases, in a total amount such that the molar ratio $M^{n+}$ : $Al^{III}$ in the mixture is a maximum of 0.4 and preferably a maximum of 0.3.

10. Process according to any one of Claims 1 to 9, characterised in that, before crystallising the gel, crystallisation seeds are added to the reaction medium that is to form the gel in an amount of from 0.1 % to 10 % by weight of the reaction medium, the crystallisation seeds being produced especially by grinding a zeolite of the same nature as the crystalline phase to be produced.

11. Process according to any one of Claims 1 to 10, characterised in that, before crystallising the gel, the gel is matured, in a closed container, at a temperature lower than the crystallisation temperature for a period of from approximately 6 hours to approximately 6 days.

12. Process according to any one of Claims 1 to 11, characterised in that the crystallisation of the aluminosilicate gel, with or without a seed, is carried out while maintaining the gel at a temperature of from 90°C to 120°C for a period of between 2 hours and 12 days.

13. Process according to any one of Claims 1 to 12, characterised in that the calcination of the zeolite precursor is carried out at a temperature higher than 300°C and preferably of between 400°C and 700°C.

14. Zeolite precursors of aluminosilicate structure belonging to the structural family of faujasite comprising aluminosilicates having an Si:Al ratio which is higher than 1 and which may exceed 3 and which, on the one hand, have a structure of cubic symmetry comparable to that of faujasite and, on the other hand, have cavities or channels trapping molecules of at least one structuring agent ST, characterised in that the structuring agent belongs to the group formed by alkylene polyoxides corresponding to the formula

$$R - O [C_m H_{2m-1} X - O]_n R'$$

wherein each of R and R', which may be identical or different, represents a hydrogen atom or a $C_1$-$C_4$ alkyl radical, X represents a hydrogen atom or a hydroxy radical, m is 2 or 3 and may differ from one unit to another and n is a number from 25 to 800 and preferably from 40 to 600.

15. Precursors according to Claim 14, characterised in that the structuring agent ST comprises at least one compound selected from the group consisting of the ethylene polyoxides, the propylene polyoxides, the ethylene-propylene polyoxides and their monomethyl and diethyl esters.

16. Precursors according to either Claim 14 or Claim 15, characterised in that they have an X-ray diffraction pattern comparable to that which is defined in Table II of the description.

17. Application of the precursors according to any one of Claims 14 to 16 in the production, by calcination of the precursors, of zeolites of aluminosilicate structure belonging to the structural family of faujasite and having an Si:Al ratio which is higher than 1 and which may exceed 3 and, on the other hand, a structure of cubic symmetry comparable to that of faujasite, it being possible to use the zeolites especially, directly or after cation exchange, as adsorbents or as components of catalysts.

18. Application according to Claim 17, characterised in that the zeolites obtained by calcination of the precursors have a value of the parameter a of the cubic mesh of between 2.4 and 2.5 nm, have an X-ray diffraction pattern comparable to that given in Table I of the description and correspond to a formula which, based on one mesh of the cubic structure, is written

$$(v\ M^{q+}_1)\ (w\ M^{n+})\ (SiO_2)_{192-x}\ (AlO_2)^{x-}(z\ H_2O)$$

wherein $M^{q+}{}_1$ is a q-valent cation of a metal of group IA of the Periodic Table of Elements (q=1) or of an alkaline earth metal selected from Ca, Sr and Ba (q=2) or a nitrogen-containing monovalent cation (q=1), $M^{n+}$ represents a cation of at least one metal M of valency n other than an $M^{q+}$ cation and $x_1$, z, v and w are numbers such that $38 < x < 96$, $z > 0$ and depending on the state of hydration of the precursor,

$$o < v \leq \frac{x}{q} \text{ and } o < w \leq \frac{x}{n} \text{ with } qv+wn \geq x.$$

## Patentansprüche

1. Verfahren zur Herstellung von Zeolithen mit Alumosilikatgerüst der Faujasitfamilie bei einem Si:Al-Verhältnis von über 1 und gegebenenfalls von über 3, wobei man zuerst ein Reaktionsgemisch bei einem pH von über 10 herstellt, das Wasser, eine Quelle von vierwertigem Silizium, eine Quelle von dreiwertigem Aluminium, eine Quelle von Hydroxidionen in Form einer starken Base und ein Strukturierungsmittel ST enthält, um ein Alumosilikatgel zu erzeugen, das die gewünschte Zusammensetzung aufweist, um seine Kristallisation zu einer Verbindung der Faujastifamilie zu ermöglichen, wonach man das erhaltene Gel bei einer Temperatur von höchstens 150°C und unter einem Druck, der zumindest dem Eigendruck des vom Gel gebildeten Gemisches entspricht, während einer Zeitdauer hält, die ausreicht, um die Kristallisation dieses Gels zu einer Zeolithprecursorverbindung zu bewirken, die aus dem Zeolith besteht, der in seinen Hohlräumen das Strukturierungsmittel ST umschließt, und die Precursorverbindung zur Zerstörung des Strukturierungsmittels und Erzeugung des Zeoliths glüht, dadurch **gekennzeichnet**, daß das Strukturierungsmittel ST zumindest aus einer Verbindung, ausgewählt unter Alkylenpolyoxiden der Formel

$$R - O (- C_mH_{2m-1} X - O)_n - R'$$

worin R und R' gleich oder verschieden sind und jeweils ein Wasserstoffatom oder einen $C_1$-$C_4$-Alkylrest bedeuten, X ein Wasserstoffatom oder einen-OH-Rest bezeichnet, m 2 oder 3 ist und von einem Strukturelement zum anderen unterschiedlich sein kann und n eine Zahl von 25 bis 800 und vorzugsweise von 40 bis 600 ist, besteht.

2. Verfahren nach Anspruch 1, dadurch **gekennzeichnet**, daß die Menge an Strukturierungsmittel ST im zur Gelbildung bestimmten Reaktionsgemisch so gewählt wird, daß das Molverhältnis ST:$Al^{III}$ $1 \times 10^{-4}$ bis 4 und vorzugsweise $1 \times 10^{-3}$ bis 2 beträgt.

3. Verfahren nach Anspruch 1 oder 2, dadurch **gekennzeichnet**, daß die das Reaktionsgemisch bildenden und das Alumosilikatgel ergebenden Komponenten in solchen Mengen verwendet werden, daß das Gel, ausgedrückt als Molverhältnisse, eine Zusammensetzung von $Si^{IV}$:$Al^{III}$ = 2 bis 20, $OH^-$:$Al^{III}$ = 2 bis 12, ST:$Al^{III}$ = $1 \times 10^{-4}$ bis 2 und $H_2O$:$Al^{III}$ = 40 bis 200 aufweist.

4. Verfahren nach Anspruch 3, dadurch **gekennzeichnet**, daß die Zusammensetzung so gewählt wird, daß die Verhältnisse $Si^{IV}$:$Al^{III}$ = 4 bis 10, $OH^-$:$Al^{III}$ = 3 bis 10, ST:$Al^{III}$ = $1 \times 10^{-3}$ bis 2 und $H_2O$:$Al^{III}$ = 50 bis 150 betragen.

5. Verfahren nach einem der Ansprüche 1 bis 4, dadurch **gekennzeichnet**, daß das Strukturierungsmittel ST wenigstens aus einer Verbindung besteht, ausgewählt aus der Gruppe, bestehend aus Ethylen-, Propylen- und Ethylen-Propylen-Polyoxiden und ihren Monomethyl- und Dimethylethern.

6. Verfahren nach einem der Ansprüche 1 bis 5, dadurch **gekennzeichnet**, daß die Quelle des vierwertigen Siliziums ausgewählt wird aus der Gruppe, bestehend aus in Hydrogelform feinverteilter Kieselerde, Aerogelen oder kolloidalen Suspensionen, wasserlöslichen Silikaten wie Alkalisilikaten, wie z.B. Natriumsilikat, und wasserlöslichen Kieselsäureestern wie Tetraalkylorthosilikaten der Formel $Si(OR)_4$, worin R einen $C_1$-$C_4$-Alkylrest bedeutet.

7. Verfahren nach einem der Ansprüche 1 bis 6, dadurch **gekennzeichnet**, daß die Quelle des dreiwertigen Aluminiums ausgewählt wird aus der Gruppe Aluminiumsalze, Aluminiumoxide und -hydroxide, Aluminate und insbesondere Alkalialuminate wie Natriumaluminat sowie Aluminiumester wie Aluminiumtrialkanolate der Formel $Al(OR)_3$, worin R einen $C_1$-$C_4$-Alkylrest bedeutet.

8. Verfahren nach einem der Ansprüche 1 bis 7, dadurch **gekennzeichnet**, daß die Quelle der Hydroxidionen ausgewählt wird aus der Gruppe Hydroxide von Alkalimetallen der Gruppe IA des Periodensystems, Hydroxide der Erdalkalimetalle Ca, Sr und Ba und starke organische Basen.

**9.** Verfahren nach einem der Ansprüche 1 bis 8, dadurch **gekennzeichnet**, daß das Reaktionsgemisch Kationen $M^{n+}$ wenigstens eines Metalls M mit der Wertigkeit n enthält, und zwar von Metallen, deren Hydroxide keine starken Basen bilden, in einer solchen Gesamtmenge, daS das Molverhältnis $M^{n+}:Al^{III}$ im Gemisch höchstens 0,4, vorzugsweise jedoch höchstens 0,3 beträgt.

**10.** Verfahren nach einem der Ansprüche 1 bis 9, dadurch **gekennzeichnet**, daß man vor der Kristallisation des Gels dem für die Geldbildung bestimmten Reaktionsmedium Kristallisationskeime in einer Menge von 0,1 bis 10 Gew.-%, bezogen auf das Reaktionsmedium, zusetzt, wobei diese insbesondere durch Zerkleinern eines Zeoliths, der von derselben Art ist wie die zu erzeugende kristalline Phase, hergestellt werden.

**11.** Verfahren nach einem der Ansprüche 1 bis 10, dadurch **gekennzeichnet**, daß man vor der Kristallisation des Gels dieses in einem geschlossenen Raum bei einer Temperatur unterhalb der Kristallisationstemperatur während ca. 6 Stunden bis ca. 6 Tagen reifen läßt.

**12.** Verfahren nach einem der Ansprüche 1 bis 11, dadurch **gekennzeichnet**, daß die Kristallisation des Alumosilikatgels in An- oder Abwesenheit von Keimen so durchgeführt wird, daß das Gel bei einer Temperatur zwischen 90 und 120°C während 2 Stunden bis 12 Tagen gehalten wird.

**13.** Verfahren nach einem der Ansprüche 1 bis 12, dadurch **gekennzeichnet**, daß das Glühen der Zeolithprecursorverbindung bei einer Temperatur von über 300°C und vorzugsweise zwischen 400 und 700°C durchgeführt wird.

**14.** Precursorverbindungen von Zeolithen mit Alumosilikatgerüst der Faujastifamilie, bestehend aus Alumosilikaten mit einem Si:Al-Verhältnis von über 1 und gegebenenfalls von über 3, die einerseits eine Struktur von kubischer Symmetrie aufweisen, vergleichbar mit derjenigen von Faujasit, und andererseits Hohlräume oder Kanäle besitzen, die Moleküle wenigstens eines Strukturierungsmittels ST umschließen, dadurch **gekennzeichnet**, daß das Strukturierungsmittel zu der aus den Alkylenpolyoxiden der Formel

$$R - O (- C_mH_{2m-1} X - O)_n - R'$$

worin R und R' gleich oder verschieden sind und jeweils ein Wasserstoffatom oder einen $C_1$-$C_4$-Alkylrest bedeuten, X ein Wasserstoffatom oder einen -OH-Rest bezeichnet, m 2 oder 3 ist und von einem Strukturelement zum anderen unterschiedlich sein kann und n eine Zahl von 25 bis 800 und vorzugsweise von 40 bis 600 ist, gebildeten Gruppe gehört.

**15.** Precursorverbindungen nach Anspruch 14, dadurch **gekennzeichnet**, daß das Strukturierungsmittel ST wenigstens aus einer Verbindung besteht, ausgewählt aus der Gruppe, bestehend aus Ethylen-, Propylen- und Ethylen-Propylen-Polyoxiden und ihren Monomethyl- und Dimethylethern.

**16.** Precursorverbindungen nach einem der Ansprüche 14 oder 15, dadurch **gekennzeichnet**, daß sie ein Röntgenbeugungsdiagramm aufweisen, das mit dem in Tabelle II des Beschreibungstextes definierten vergleichbar ist.

**17.** Verwendung der Precursorverbindungen nach einem der Ansprüche 14 bis 16 zur Herstellung von Zeolithen mit Alumosilikatgerüst der Faujastifamilie bei einem Si:Al-Verhältnis von über 1 und gegebenenfalls von über 3, die andererseits eine Struktur von kubischer Symmetrie aufweisen, vergleichbar mit derjenigen von Faujasit, durch Glühen der Precursorverbindungen, wobei die Zeolithe unmittelbar oder nach Kationenaustausch als Adsorbentien oder als Katalysatorkomponenten verwendet werden können.

**18.** Verwendung nach Anspruch 17, dadurch **gekennzeichnet**, daß die durch Glühen der Precursorverbindungen erhaltenen Zeolithe einen Wert des Parameters a der kubischen Elementarzelle zwischen 2,4 und 2,5 nm aufweisen und ein Röntgenbeugungsdiagramm zeigen, das mit dem in Tabelle I des Beschreibungstextes dargestellten vergleichbar ist, das - zurückgeführt auf eine Elementarzelle von kubischer Struktur - folgende Formel aufweist:

$$(v \, M^{q+}_1) \, (w \, M^{n+}) \, (SiO_2)_{192-x} \, (AlO_2)^{x-} \, (z \, H_2O)$$

worin $M^{q+}_1$ ein q-wertiges Kation eines Metalls der Gruppe IA des Periodensystems (q=1) oder eines Erdalkalimetalls der Gruppe Ca, Sr und Ba (q=2) oder ein einwertiges, Stickstoff enthaltendes Kation (q=1) bedeutet, $M^{n+}$ das Kation wenigstens eines Metalls M mit einer von der des Kations $M^{q+}_1$ unterschiedlichen Wertigkeit n darstellt und x, z, v und w den Zahlenwerten $38 < x < 96$, $z > 0$ entsprechen und je nach dem Hydratisierungszustand der Precursorverbindungen $0 < v \leqq \frac{x}{q}$ und $0 < w \leqq \frac{x}{n}$ mit $qv + wn \geqq x$ bedeuten.